Europäisches Patentamt

European Patent Office

Office européen des brevets

(11) Publication number: **0 433 516 A1**

# EUROPEAN PATENT APPLICATION

(21) Application number: 89440139.7

(22) Date of filing: 20.12.89

(51) Int. Cl.⁵: **A01N 1/00, A01N 3/00**

(43) Date of publication of application:
**26.06.91 Bulletin 91/26**

(84) Designated Contracting States:
**AT BE CH DE ES FR GB GR IT LI LU NL SE**

(71) Applicant: **Lemberger, William A.**
**2500 Waukau Avenue P.O. Box 2482**
**Oshkosh Wisconsin 54903(US)**

(72) Inventor: **Lemberger, William A.**
**2500 Waukau Avenue P.O. Box 2482**
**Oshkosh Wisconsin 54903(US)**

(74) Representative: **Nuss, Pierre et al**
**10, rue Jacques Kablé**
**F-67000 Strasbourg(FR)**

(54) **Preservative for biological specimens.**

(57) A preservative for biological specimens containing hydantoin, Dowacil 75, alkyl paraben, neo cebitate and metal sulfate. Al least one alcohol, approved for topical use, and ethylene glycol are used to put the paraben in solution.

EP 0 433 516 A1

Xerox Copy Centre

## PRESERVATIVE FOR BIOLOGICAL SPECIMENS

Background of the Invention

Biological specimens are used every day for the purposes of education. The present invention relates generally to the field of biological specimens and specifically to the field of the preservation of dead biological specimens for the purpose of study and dissection.

In order to preserve the specimens embalming fluid is used. Many different chemicals are used, because of their preservative effects, for embalming fluids. For most of the nineteenth century arsenical compounds were used. However, the use of these compounds was restricted due to the dangers they presented to the living people who would be exposed to them.

Today, a different problem occurs with formaldehyde. Formaldehyde is a very good preservative, however, it tends to cause changes in the specimens that render them less life-like. Some companies attempt to avoid this problem by trying to wash the formaldehyde out of the specimens before they are shipped. This leaves the specimens slightly more life-like. However, washing the specimens does not remove all the formaldehyde from them. Also, because a great deal of the formaldehyde is removed, the specimen is more vulnerable to biological damage; like decay. The present invention is a totally new preservative formula based largely upon chemicals which are approved for use in foods. Therefore, the formula is believed safe for both the persons who prepare the specimens and the persons who use the specimens. In addition, there is an unexpected advantage, the specimens are much more life-like both in color and texture than those prepared in formaldehyde. For that reason they are much better for instructional purposes than specimens preserved in formaldehyde.

A number of preservatives that do not contain formaldehyde are known to the inventor. See for example, U.S. Pat. Nos. 3,257,279 (Schain); 3,546,334 (Lerner); 3,624,197 (Schain); 3,837,979 (Brown); 4,1674,393 (Drury); 4,727,571 (Romero-Sierra et al.); 4,287,222 (Robinson); 4,278,715 (Romero-Sierra et al.); 4,328,256 (Romero-Sierra et al.); 4,349,580 (Romero-Sierra et al.); 4,463,117 (Maline). However, none of the above compositions make use of the same composition of chemicals as in the present invention to achieve their preservative effects. Also, none of the prior art compositions is for the specific purpose of preserving biological specimens for both study and dissection. For example, U.S. Pat. No. 3,837,979 (Brown) claims a method for suspending specimens in a stable, continuous gel whereby the specimen may be observed as it is held immobile in the transparent gel. U.S. Pat No. 4,4463,117 (Maline) shows a process with a result similar to the Brown patent but a different procedure is used. The remaining patents disclose compositions used to preserve animal hides, to preserve plants or plant tissue, and for the preparation of slides for the purpose of microscopic study.

No prior art is known to the inventor which replaces formaldehyde as a preservative for the preparation of biological specimens to be studied and/or dissected.

Summary of the Invention

The present invention is a mixture of unique composition containing hydantoin, Dowacil 75, methyl paraben, neo cebitate and aluminum sulfate. Isopropyl alcohol and ethylene glycol is used to put the paraben in solution. The resulting solution is used to preserve the biological specimen.

Each component used in making the composition, with the exception of the ethylene glycol and isopropyl alcohol, has been approved as a food additive. The concentrations of each component of the composition, again with the exception of the ethylene glycol and isopropyl alcohol, are at or below the approved level for use as a food additive. Furthermore, the levels of ethylene glycol and isopropyl alcohol used are believed safe for topical applications. Because they are believed safe for topical use they are believed safe for preparation of specimens that are to be handled and dissected.

The specimens that are preserved in this composition remain more life-like and flexible than specimens preserved in formaldehyde compositions. These and other benefits of the present invention will be apparent from the following description.

Detailed Description

Although the disclosure hereof is detailed and exact to enable those skilled in the art to practice the invention, the physical embodiments herein disclosed merely exemplify the invention which may be embodied in other specific structure. While the preferred embodiment has been described, the details may be changed without departing from the invention, which is defined by the claims.

To make 190 liters (50 gallons) of the preservative composition the following formula is used:
.24% Dowacil 75 - 1 lb. (454g)

5% isopropyl alcohol - 12 quarts 12 oz. (12.1 liters)

5% ethylene glycol - 9 quarts (8.5 liters)

1% methyl paraben - 4 lbs. 2oz. (1892g)

1% neo-cebitate - 4 lbs. 2oz. (1892g)

.24% commercial alum - 1 lb. (454g)

1 quart DMDM Hydantoin

Two separate solutions are prepared using the above ingredients:

A. The methyl paraben is dissolved in the isopropyl alcohol and ethylene glycol

B. The Dowacil, neo-cebitate, alum, and DMDM hydantoin are dissolved in water (for example, 25 gallons of water)

Combine the two solutions (A and B) and add enough water to make 50 gallons. If any material does not dissolve, simply use the solution above the precipitate and discard the undissolved material.

It should be noted that in the above formulation the active ingredient in Dowacil 75, a commercial tradename, is 1-(3-chlorolallyl)- 3, 5, 7-triaza-1-azoniaadamaztane chloride. Specifically, the 1-(3-chlorolallyl)- 3, 5, 7-triaza-1-azoniaadamaztane chloride comprises 67.5% of the Dowacil 75 with the rest being inert ingredients. Also, the commercial alum listed in the above formulation is generally a metal sulfate; the most common is potassium aluminum sulfate. Finally, the ethylene glycol, in addition to helping put the methyl paraben into solution, aids the ability of the preservative solution to penetrate the tissue of the specimen quickly and effectively.

The above described embodiments of this invention are merely descriptive of its principles and are not to be limiting. The scope of this invention instead shall be determined from the scope of the following claims, including their equivalents.

## Claims

1. A composition for biological specimens or tissues of all kinds comprising:

an effective amount of at least one alkyl paraben;

A sufficient amount of at least one alcohol, approved for topical use, and a sufficient amount of ethylene glycol in which the above alkyl paraben may be put into solution;

an effective amount of hydantoin;

an effective amount of Dowacil 75;

an effective amount of neo cebitate;

an effective amount of at least one metal sulfate;

a sufficient amount of water in which the above ingredients may be mixed whereby the resulting solution is used to preserve biological or tissue specimens.

2. The composition of claim 1 in which the alcohol is isopropyl alcohol.

3. The composition of claim 1 in which the alkyl paraben is methyl paraben.

4. The composition of claim 1 in which the metal sulfate is potassium aluminum sulfate.

5. The composition of claim 1 in which the solution is substantially saturated.

6. The composition as claimed in claim 1 comprising in a 190 liter formula;

454 grams .24% Dowacil 75;

12.1 liters 5% isopropyl alcohol;

8.5 liters 5% ethylene glycol;

1892 grams 1% methyl paraben;

1892 grams 1% neo-cebitate;

454 grams .24% commercial alum;

.95 liters DMDM hydantoin;

the methyl paraben being dissolved in isopropyl alcohol and ethylene glycol;

the Dowacil, neo-cebitate, commercial alum, and DMDM hydantoin being dissolved in water;

the solution of Dowacil, neo-cebitate, commercial alum and DMDM hydantoin being mixed with the paraben solution;

and sufficient water to make 190 liters of the composition being added to the mixture of the two solutions;

whereby the composition may be used to preserve biological specimens.

7. The composition of claim 1 in which the ethylene glycol also acts to enhance penetration of the preservative composition into the tissue of the specimen;

whereby all the tissues of the specimen become impregnated with the preservative composition.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | GB-A-1 383 272  (CANADIAN PATENTS AND DEVELOPMENT LTD) <br> * Example 1 * <br> --- | 1-7 | A 01 N    1/00 <br> A 01 N    3/00 |
| A | US-A-4 482 537  (EL-SAYED EL MENSHAWY et al.) <br> * Claim 1 * <br> ----- | 1-7 | |

TECHNICAL FIELDS
SEARCHED (Int. Cl.5)

A 01 N

The present search report has been drawn up for all claims

| Place of search | Date of completion of the search | Examiner |
|---|---|---|
| THE HAGUE | 22-08-1990 | RAVANEL C.M. |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
...........................................................................
& : member of the same patent family, corresponding
    document

EPO FORM 1503 03.82 (P0401)